# EUROPÄISCHE PATENTANMELDUNG

(11) **EP 1 403 077 A1**
(43) Veröffentlichungstag der Anmeldung: **31.03.2004**
(21) Anmeldenummer: 02021184.3
(22) Anmeldetag: 24.09.2002
(51) Int. Cl.: B41J 2/45, H04N 1/028, G02B 13/18

(54) **Vorrichtung zum zeilenförmigen Beleuchten**

(71) Anmelder: Agfa-Gevaert AG, 51373 Leverkusen (DE)
(72) Erfinder: Gressierer, Bernhard, 85276 Pfaffenhofen (DE); Thoma, Ralph, 86167 Augsburg (DE); Melzer, Volker, 81671 München (DE); Niering, Markus, 85395 Attenkirchen (DE)

(57) **Zusammenfassung**

Die Erfindung betrifft eine Vorrichtung zum zeilenförmigen Beleuchten einer Oberfläche mit Licht unterschiedlicher Wellenlängen. Die Vorrichtung hat hierzu in mehreren Zeilen (22) nebeneinander angeordnete Punktlichtquellen (24) zum Abstrahlen von Licht unterschiedlicher-Wellenlängen in eine vorgegebene Abstrahlrichtung (A) sowie eine optische Einrichtung (14) zum homogenen Beleuchten der Oberfläche (18). Die optische Einrichtung (14) weist hierzu für jede Zeile (22) nebeneinander angeordneter Punktlichtquellen (24) eine asphärische Linse (26) zum Bündeln der von den Punktlichtquellen (24) dieser Zeile (22) abgestrahlten Lichtstrahlen (30) sowie einen in Abstrahlrichtung (A) gesehen den asphärischen Linsen (26) nachgeordneten Feldlinse (28) zum Homogenisieren der Lichtstrahlen (30) auf.

## Beschreibung

Die Erfindung betrifft eine Vorrichtung gemäß dem Oberbegriff des Anspruchs 1 zum zeilenförmigen Beleuchten einer Oberfläche mit Licht unterschiedlicher Wellenlängen.

Eine Vorrichtung der eingangs genannten Art wird beispielsweise in Abtasteinrichtungen eingesetzt, um eine Oberfläche, in der beispielsweise eine Abtasteinheit angeordnet ist, zeilenförmig zu beleuchten.

Zum zeilenförmigen Beleuchten ist die Verwendung länglicher Lichtquellen, wie Leuchtstoffröhren, bekannt, deren Licht durch optische Einrichtungen, so zum Beispiel Streuscheiben, Linsen und ähnliches, homogenisiert wird.

Werden jedoch spektral getrennte Lichtquellen, beispielsweise LEDs oder Laserdioden, eingesetzt, müssen deren Lichtstrahlen durch aufwändige dichroitische optische Einrichtungen in einem Strahlengang überlagert werden.

So offenbart die US 5 537 229 eine Vorrichtung zum Abtasten farbiger Vorlagen, bei der für jede Farbe getrennte Lichtquellen eingesetzt werden, deren Lichtstrahlen über teildurchlässige optische Elemente in einem Strahlengang zusammengeführt werden. Derartige teildurchlässige Elemente sind jedoch sehr kostspielig und müssen insbesondere für eine ausreichende Lichtqualität zueinander exakt positioniert sein, wozu entsprechend aufwändig gestaltete Justiereinrichtungen an der Vorrichtung vorgesehen sein müssen.

Aus der US 6 299 329 ist eine Lichtquelle für Abtasteinrichtungen bekannt, bei der in zeilenweiser Anordnung eine Vielzahl Punktlichtquellen, die sich hinsichtlich des von ihnen abgestrahlten Wellenlängenbereiches voneinander unterscheiden, gemischt angeordnet sind. Durch die gemischte, zeilenweise Anordnung der spektral getrennten Punktlichtquellen soll eine gleichmäßige Beleuchtung mit Licht unterschiedlicher Wellenlängen erreicht werden. Die Art der Anordnung der Punktlichtquellen führt jedoch zu einer ungenügenden Lichtdurchmischung, die eine nur mäßige Ausleuchtungshomogenität zur Folge hat. Des weiteren können durch die gemischte Anordnung der spektral getrennten Punktlichtquellen unterschiedliche Wellenlängenbereiche nur durch aufwändige Mosaikfilter ausgefiltert werden.

Die US 6 042 013 offenbart eine Vorrichtung zum zeilenförmigen Beleuchten einer Abtasteinheit mit Licht unterschiedlicher Wellenlängen, bei der Licht getrennter Lichtquellen in einem Lichtmischer gemischt und auf die zu beleuchtende Abtasteinheit projiziert wird. Ein derartiger Lichtmischer ist jedoch sehr aufwändig in seiner Herstellung und muss mit hoher Genauigkeit zu den Lichtquellen positioniert werden, damit die gewünschte Wirkung erzielt werden kann.

Es ist Aufgabe der Erfindung, eine Vorrichtung zum zeilenförmigen Beleuchten einer Oberfläche mit Licht unterschiedlicher Wellenlängen anzugeben, die einfach aufgebaut ist und eine gute Homogenisierung der Lichtstrahlen bewirkt.

Die Erfindung löst die Aufgabe durch eine Vorrichtung mit den Merkmalen nach Anspruch 1.

Bei der erfindungsgemäßen Vorrichtung sind eine Vielzahl von Punktlichtquellen jeweils in gemeinsamen Zeilen zusammengefasst, nebeneinander angeordnet. Die in einer gemeinsamen Zeile nebeneinander angeordneten Punktlichtquellen können dabei entweder Licht gleicher Wellenlängen oder Licht unterschiedlicher Wellenlängen abstrahlen. Vor jede Zeile nebeneinander angeordneter Punktlichtquellen ist erfindungsgemäß eine Linse angeordnet, welche die von den Punktlichtquellen dieser Zeile abgestrahlten Lichtstrahlen erfasst, bündelt und in die Eintrittspupille der nachgeordneten Feldlinse leitet. Die von den Punktlichtquellen abgestrahlten Lichtstrahlen werden dabei durch Gestalt und Anordnung der diesen jeweiles zugeordneten asphärischen Linse bereits so zusammengeführt, dass eine Homogenisierung der von den Punktlichtquellen abgestrahlten einzelnen Lichtstrahlen eintritt. Das so von jeder asphärischen Linse bereits homogenisierte Licht wird anschließend in die Feldlinse weitergeleitet, in der die einzelnen Lichtstrahlen der asphärischen Linsen zusammengeführt und weiter homogenisiert werden. Der so entstehende homogene Lichtstrahl wird anschließend zum Beleuchten der Oberfläche auf diese projiziert, wobei sich auf der Oberfläche eine verglichen mit dem Stand der Technik vergleichbare Ausleuchtungshomogenität bei stark vereinfachtem Aufbau ergibt.

Die Zusammenführung der Lichtstrahlen der Punktlichtquellen-Zeilen erfolgt erfindungsgemäß, indem der Abstand zwischen den Zeilen der nebeneinander angeordneten Punktlichtquellen größer gewählt wird als der Abstand der optischen Achsen zwischen den nebeneinander angeordneten asphärischen Linsen, so dass zumindest einige der asphärischen Linsen mit ihren optischen Achsen versetzt zu den diesen jeweils zugeordneten Zeilen angeordnet sind. Durch diese versetzte Anordnung zwischen den Punktlichtquellen und den diesen jeweils zugeordneten asphärischen Linsen wird erreicht, dass das von den Punktlichtquellen jeder Zeile abgestrahlte Licht von den Eintrittspupillen der asphärischen Linsen einerseits erfasst und das erfasste Licht andererseits in eine vorgegebene Richtung in die Eintrittspupille abgelenkt wird. Hierdurch ist es möglich, die Strahlengänge der einzelnen asphärischen Linsen derart zueinander auszurichten, dass sich die von den Linsen abgelenkten Lichtstrahlen in der Feldlinse überdekken, wodurch die besonders hohe Homogenisierungswirkung des Lichtes in der Feldlinse erreicht wird.

Bevorzugt ist der Abstand der Punktlichtquellen jeder Zeile zu der der jeweiligen Zeile zugeordneten asphärischen Linse, die Brennweite dieser zugeordneten asphärischen Linse sowie der Abstand der jeweiligen asphärischen Linse zur Eintrittspupille der Feldlinse so ausgelegt, dass die Punktlichtquellen der Zeile die Eintrittspupille der Feldlinse zeilenförmig vollständig ausleuchten. Durch diese optimierte Anordnung der Punktlichtquellen jeder Zeile zu den diesen jeweils zugeordneten asphärischen Linsen sowie durch die gezielte Auswahl der Brennweite dieser Linsen und des Abstandes der Linsen zur Eintrittspupille der Feldlinse werden die Lichtverluste minimiert.

Als asphärische Linsen werden vorzugsweise Zylinderlinsen oder torische Linsen eingesetzt. So zeichnet sich die Zylinderlinse insbesondere dadurch aus, dass das Licht in der Ebene der Zylinderlinsenachse aufgrund der auftretenden Lichtdurchmischung besonders gut homogenisiert wird. Bei den torischen Linsen erfolgt die Homogenisierung durch die Lichtdurchmischung in der Ebene mit dem größeren Linsenradius.

Besonders bevorzugt sind die in einer gemeinsamen Zeile jeweils angeordneten Punktlichtquellen zu einer Gruppe zusammengefasst und strahlen Licht gleicher Wellenlängen ab. Hierdurch ist eine gemeinsame Ansteuerung der einzelnen Farben auf einfache Weise möglich. Ferner ist die Filterung derartiger Zeilen aus identisch ausgebildeten Punktlichtquellen vergleichsweise einfach.

Bei der Verwendung eines erfindungsgemäßen Aufbaus ist es ferner von Vorteil, wenn die Entfernung zwischen Punktlichtquellen und Zylinder- oder torischen Linsen wenigsten so groß gewählt wird, dass die Linsen vollständig ausgeleuchtet werden. Dadurch erscheinen die Linsen als homogene Lichtquelle, die von der Feldlinse homogen abgebildet werden kann. Die Inhomogenität einzelner Leuchtpunkte kann dadurch überwunden werden.

Besonders bevorzugt erzeugt die Vorrichtung blaues Licht mit Wellenlängen in einem Bereich von etwa 420 bis 510 nm, grünes Licht mit Wellenlängen in einem Bereich von etwa 510 bis 585 nm sowie rotes Licht mit Wellenlängen in einem Bereich von etwa 585 bis 780 nm. Sofern gewünscht, können auch Punktlichtquellen zum Einsatz kommen, die infrarotes Licht mit Wellenlängen in einem Bereich von etwa 780 nm bis 1 mm auf die Oberfläche abstrahlen.

Als Punktlichtquellen werden vorzugsweise LEDs oder Laserdioden eingesetzt, die sehr schaltbar sind und Licht mit hoher Lichtintensität erzeugen können.

Um die Ansteuerung der einzelnen Punktlichtquellen der Vorrichtung zu erleichtern, wird bei einer besonders bevorzugten Ausführungsform der Vorrichtung vorgeschlagen, die Punktlichtquellen, die Licht gleicher Wellenlängen abstrahlen, jeweils zu Gruppen zusammenzufassen, welche gemeinsam anzusteuern sind. Es besteht dann die Möglichkeit, die Gruppen verschiedener Wellenlängenbereiche auf einfache Weise sequenziell oder parallel anzusteuern.

Da Punktlichtquellen üblicherweise Licht mit einem größeren Wellenlängenbereich abstrahlen, ist es von Vorteil, zwischen der asphärischen Linse und den Punktlichtquellen ein Filteraggregat mit Filtern anzuordnen, die Wellenlängenbereiche ausfiltern, mit denen die Oberfläche nicht beleuchtet werden soll.

Als besonders bevorzugter Anwendungsbereich wird vorgeschlagen, die erfindungsgemäße Vorrichtung als-Abtastvorrichtung auszubilden, bei der in der zu beleuchtenden Oberfläche eine Abtasteinheit, vorzugsweise eine CCD-Einheit, angeordnet ist. Mit Hilfe der Feldlinse wird dann das von den Punktlichtquellen abgestrahlte Licht durch eine abzutastende Vorlage, beispielsweise eine Bildvorlage, gelenkt, deren Abbildung auf die Abtasteinheit abgebildet wird.

Bei dieser Abtastvorrichtung wird ferner vorgeschlagen, zwischen der Vorlage und der Abtasteinheit eine Abbildungsoptik anzuordnen, mit der die Vorlage auf der Abtasteinheit projiziert werden kann.

Des weiteren eignet sich die erfindungsgemäße Vorrichtung als Linienbeleuchtung für Zeilenmodulatoren, insbesondere als Linienbeleuchtung für GLV-Zeilen (Grating Light Valve), PLZT-Zeilen (Blei (Pb)-Lanthan-Zirkonium-Titanat), DMD-Zeilen (Digital Micromirror Device), LCD-Zeilen oder Lichtleitfaserzeilen. Damit ist sie vorteilhaft sowohl in Scannern als auch in Printern einsetzbar.

Weitere Merkmale und Vorteile der Erfindung ergeben sich aus der folgenden Beschreibung einer bevorzugten Ausführungsform, wobei Bezug auf die beigefügten Zeichnungen genommen wird.

Es zeigen:
- Fig. 1: eine Seitenansicht einer erfindungsgemäßen Vorrichtung zum Beleuchten einer Vorlage in schematischer Darstellung, die als Abtastvorrichtung zum Einsatz kommt,
- Fig.2: eine Draufsicht der in Fig. 1 gezeigten Vorrichtung in schematischer Darstellung;
- Fig. 3: eine Draufsicht auf eine Lichtquelle der Vorrichtung nach Fig. 1 mit in mehreren Zeilen angeordneten Punktlichtquellen; und
- Fig. 4: eine Seitenansicht der Lichtquelle mit vor dieser angeordneten Zylinderlinsen.

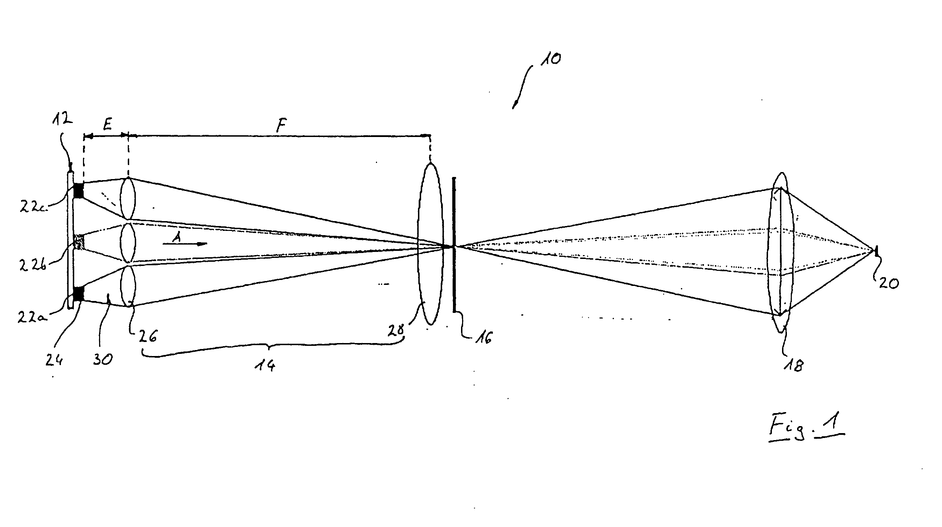

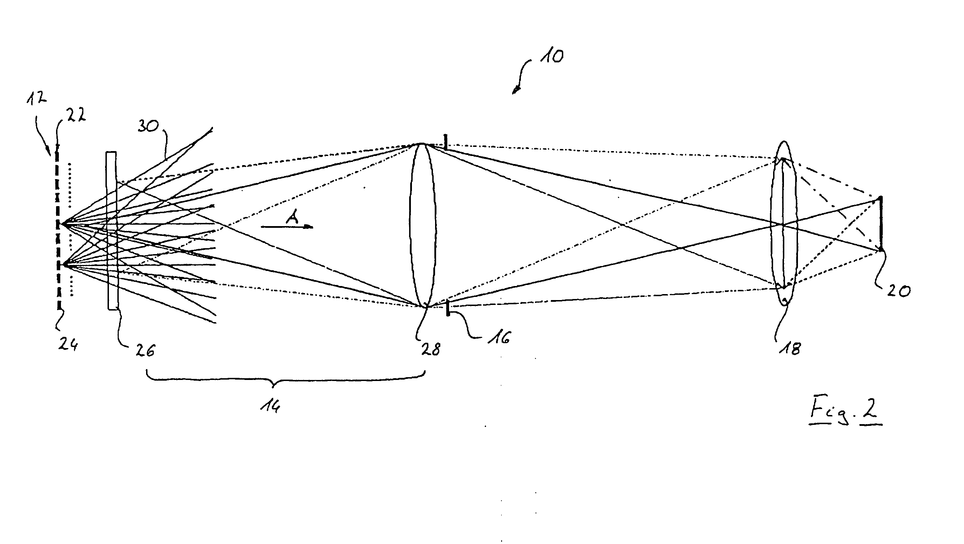

In den Fig. 1 und 2 sind in schematischer Darstellung eine Seitenansicht einer sowie eine Draufsicht auf eine Vorrichtung 10 zum zeilenförmigen Beleuchten gezeigt, die im vorliegenden Fall als Abtastvorrichtung eingesetzt ist.

Die Vorrichtung 10 weist eine Lichtquelle 12 auf, der in Abstrahlrichtung A eine optische Einrichtung 14 nachgeordnet ist. Die optische Einrichtung 14 homogenisiert das von der Lichtquelle 12 abgestrahlte Licht und leitet es durch eine Filmbühne 16, in der eine nicht dargestellte, abzutastende Vorlage zu positionieren ist, in die Eintrittspupille einer Abbildungsoptik 18. Die Abbildungsoptik 18 projiziert das von der optischen Einrichtung 14 durch die Vorlage abgestrahlte Licht auf eine Abtasteinheit 20, die im vorliegenden Fall als CCD-Zeile ausgebildet ist.

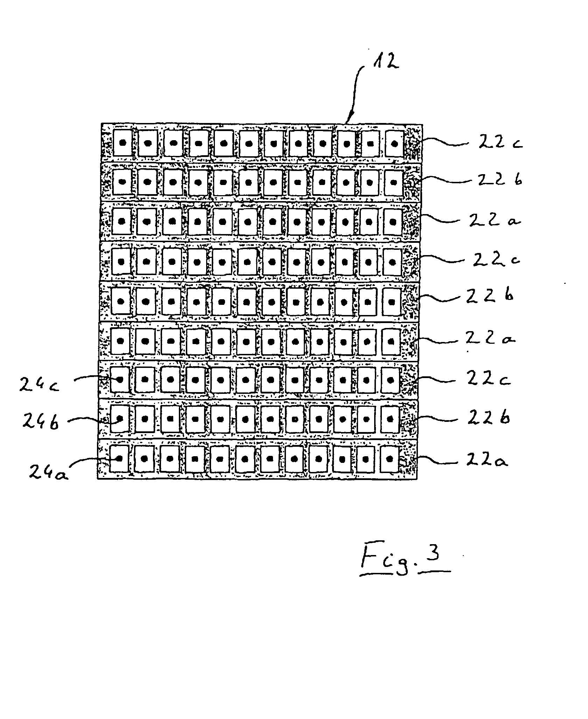

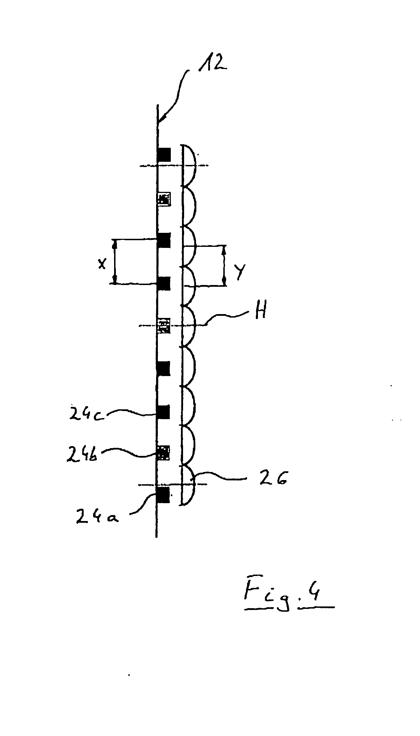

Die in den Fig. 1 und 2 aus Übersichtlichkeitsgründen nur schematisch dargestellte Lichtquelle 12 wird nachfolgend unter Bezugnahme auf die Fig. 3 und 4 näher erläutert.

Wie Fig. 3 zeigt, ist die Lichtquelle 12 aus mehreren parallel nebeneinander in einer gemeinsamen Ebene angeordneten Zeilen 22a, 22b und 22c gebildet. Jede Zeile 22a, 22b bzw. 22c weist eine vorgegebene Anzahl an Punktlichtquellen 24a, 24b bzw. 24c auf. Die Zeilen 22a, 22b und 22c sind im wesentlichen identisch ausgebildet und unterscheiden sich lediglich hinsichtlich der Wellenlängenbereiche des von den jeweiligen Punktlichtquellen 24a, 24b bzw. 24c abgestrahlten Lichtes. So strahlen die Zeilen 22a blaues Licht mit Wellenlängen in einem Bereich von etwa 420 bis 510 nm ab, während die Zeilen 22b grünes Licht mit Wellenlängen in einem Bereich von etwa 510 bis 585 nm abstrahlen. Die Zahlen 22c strahlen dagegen rotes Licht mit Wellenlängen in einem Bereich von etwa 585 bis 780 nm ab.

Die einzelnen Zeilen 22a, 22b und 22c sind dabei so relativ zueinander angeordnet, dass jeweils eine Zeile 22a, 22b bzw. 22c zur Emission von Licht eines vorgegebenen Wellenlängenbereichs neben einer Zeile 22b, 22c bzw. 22a angeordnet ist, die Licht eines anderen Wellenlängenbereichs abstrahlt. Durch diese aufeinanderfolgende abwechselnde Anordnung der Zeilen 22a, 22b bzw. 22c wird eine gleichmäßige Verteilung von Licht unterschiedlicher Wellenlängenbereiche über die gesamte Fläche der Lichtquelle 12 erreicht.

Die einzelnen Zeilen 22a, 22b bzw. 22c, die Licht gleicher Wellenlängen abstrahlen, sind jeweils zu Gruppen zusammengefasst und können getrennt von den anderen Zeilen 22a, 22b bzw. 22c angesteuert und eingestellt werden.

Wie Fig. 4 zeigt, in der eine Seitenansicht der in Fig. 3 gezeigten Lichtquelle 12 dargestellt ist, sind mit einem vorgegebenen Abstand E (vgl. auch Fig. 1) eine der Anzahl der Zeilen 22a, 22b und 22c entsprechende Anzahl an parallel nebeneinander angeordneter Zylinderlinsen 26 in einer zur Lichtquelle 12 parallelen Ebene angeordnet. Dabei ist jeder Zeile 22a, 22b bzw. 22c jeweils eine der Zylinderlinsen 26 zugeordnet.

Die Zeile 22b, die in der Ebene, in der die optische Hauptachse H der optischen Einrichtung 14 liegt, angeordnet ist, ist mit mittig zu der ihr zugeordneten Zylinderlinse 26 positioniert. Der Abstand x der zu dieser Zeile 22b benachbarten Zeilen 22a, c ist jedoch so gewählt, dass er etwas größer ist als der Abstand y zwischen den diesen jeweils zugeordneten Zylinderlinsen 26. Hierdurch ergibt sich ein vorgegebener Versatz zwischen den nebeneinander angeordneten Zeilen 22a, b, c und den diesen jeweils zugeordneten Zylinderlinsen 26. Durch diesen Versatz wird erreicht, dass das von den Punktlichtquellen 24 abgestrahlte, in Richtung der Feldlinse 28 gelenkte Licht 30 auf der Vorlagenzeile überlagert wird, wie insbesondere auch Fig. 1 zeigt.

Ferner sind der Abstand E der Punktlichtquellen 24 jeder Zeile 22 zu der der jeweiligen Zeile zugeordneten asphärischen Linse 26, die Brennweite der jeweiligen asphärischen Linse 26 sowie der Abstand F der asphärischen Linsen 26 zur Eintrittspupille der Feldlinse 28 so gewählt, dass sich das Licht der Punktlichtquellen 24 der verschiedenen Zeilen 22 in der Eintrittspupille der Feldlinse 28 überlagert, so dass die Feldlinse 28 zeilenförmig vollständig ausgeleuchtet ist.

Die Feldlinse 28 beleuchtet wiederum mit diesem homogenisierten Lichtstrahl die in der Filmbühne 16 positionierte Vorlage, deren Abbild durch die Abbildungsoptik 18 auf die Abtasteinheit 20 projiziert wird. Die Abtasteinheit 20 erzeugt basierend auf dem Abbild der Vorlage entsprechende Bildinformationen, die beispielsweise für einen nachfolgenden Belichtungsvorgang verwendet werden können.

Bei der Erfindung werden die von den Punktlichtquellen 24 abgestrahlten Lichtstrahlen 30 durch die Gestalt der asphärischen Linsen 26 sowie durch die versetzte Anordnung der Linsen 26 zu den Zeilen 22 so zusammengeführt, dass eine Homogenisierung der von den Punktlichtquellen 24 abgestrahlten einzelnen Lichtstrahlen 30 in der jeweiligen asphärischen Linse 26 auftritt. Das so von den asphärischen Linsen 26 bereits homogenisierte Licht wird anschließend in die Feldlinse 28 weitergeleitet, von dem die einzelnen Lichtstrahlen 30 der asphärischen Linsen 26 die Vorlagenzeile überlagert beleuchten. Hierdurch läßt sich eine sehr homogene und gleichmäßige Ausleuchtung der Vorlage und der Abtasteinheit 20 mit Licht, das aus unterschiedlichen Wellenlängenbereichen zusammengesetzt ist, auf einfache Weise erreichen.

Die zuvor beschriebene Vorrichtung, insbesondere die zuvor beschriebene erfindungsgemäße optische Einrichtung 14, ist für vielfältigste Einsatzzwecke verwendbar. So eignet sich die erfindungsgemäße Vorrichtung 10 beispielsweise auch als Linienbeleuchtung für Zeilenmodulatoren, wie GLV-Zeilen, PLZT-Zeilen, DMD-Zeilen, LCD-Zeilen oder Lichtleitfaserzeilen. Hierzu 4 Blatt Zeichnungen

## Patentansprüche

1. Vorrichtung zum zeilenförmigen Beleuchten einer Oberfläche mit Licht unterschiedlicher Wellenlängen, mit
in mehreren Zeilen (22) nebeneinander angeordneten Punktlichtquellen (24) zum Abstrahlen von Licht unterschiedlicher Wellenlängen in eine vorgegebene Abstrahlrichtung (A) und
einer optischen Einrichtung (14) zum homogenen Beleuchten der Oberfläche (18), **dadurch gekennzeichnet, dass** die optische Einrichtung (14) für jede Zeile (22) nebeneinander angeordneter Punktlichtquellen (24) eine asphärische Linse (26) zum Bündeln der von den Punktlichtquellen (24) dieser Zeile (22) abgestrahlten Lichtstrahlen (30) sowie einen in Abstrahlrichtung (A) gesehen den asphärischen Linsen (26) nachgeordneten Feldlinse (28) zum Homogenisieren der Lichtstrahlen (30) aufweist.

2. Vorrichtung nach Anspruch 1, **dadurch gekennzeichnet, dass** der Abstand (x) zwischen den Zeilen (22) der nebeneinander angeordneten Punktlichtquellen (24) größer ist als der Abstand (y) der optischen Achsen zwischen den nebeneinander angeordneten asphärischen Linsen (26), so dass zumindest einige der asphärischen Linsen (26) mit ihren optischen Achsen versetzt zu den diesen jeweils zugeordneten Zeilen (22) angeordnet sind.

3. Vorrichtung nach Anspruch 1 oder 2, **dadurch gekennzeichnet, dass** der Abstand (E) der Punktlichtquellen (24) jeder Zeile (22) zu der der jeweiligen Zeile (22) zugeordneten asphärischen Linse (26), die Brennweite dieser zugeordneten asphärischen Linse (26) sowie der Abstand (F) der asphärischen Linse (26) zur Eintrittspupille der Feldlinse (28) so ausgelegt sind, dass die Punktlichtquellen (24) der Zeile (22) die Eintrittspupille der Feldlinse (28) dieser Zeile (22) zeilenförmig ausleuchten.

4. Vorrichtung nach einem der vorhergehenden Ansprüche, **dadurch gekennzeichnet, dass** als asphärische Linsen Zylinderlinsen (26) oder torische Linsen dienen.

5. Vorrichtung nach einem der vorhergehenden Ansprüche, **dadurch gekennzeichnet, dass** die in einer gemeinsamen Zeile (22a, 22b, 22c) jeweils angeordneten Punktlichtquellen (24a, 24b, 24c) zu einer Gruppe zusammengefaßt sind und Licht gleicher Wellenlängen abstrahlen.

6. Vorrichtung nach einem der vorhergehenden Ansprüche, **dadurch gekennzeichnet, dass** der Abstand der asphärischen Linsen zu den Punktlichtquellen mindestens so groß ist, dass die Linsen vollflächig ausgeleuchtet werden.

7. Vorrichtung nach einem der vorhergehenden Ansprüche, **dadurch gekennzeichnet, dass** die Vorrichtung (10) blaues Licht mit Wellenlängen in einem Bereich von etwa 420 bis 510 nm, grünes Licht mit Wellenlängen in einem Bereich von etwa 510 bis 585 nm, rotes Licht mit Wellenlängen in einem Bereich von etwa 585 bis 780 nm und gegebenenfalls auch infrarotes Licht mit Wellenlängen in einem Bereich von 780 nm bis 1 mm auf die Oberfläche (20) strahlt.

8. Vorrichtung nach einem der vorhergehenden Ansprüche, **dadurch gekennzeichnet, dass** die Punktlichtquellen LEDs (24) oder Laserdioden sind.

9. Vorrichtung nach einem der vorhergehenden Ansprüche, **dadurch gekennzeichnet, dass** die Punktlichtquellen (24a, 24b, 24c), die Licht gleicher Wellenlängen abstrahlen, jeweils zu Gruppen zusammengefaßt und gemeinsam anzusteuern sind und dass die Gruppen verschiedener Wellenlängenbereiche untereinander sequentiell oder parallel anzusteuern sind.

10. Vorrichtung nach einem der vorhergehenden Ansprüche, **dadurch gekennzeichnet, dass** zwischen den Punktlichtquellen (24) und den zu diesen beabstandeten asphärischen Linsen (26) ein Filteraggregat mit Filtern zum Ausfiltern vorgegebener Wellenlängenbereiche angeordnet ist.

11. Vorrichtung nach einem der vorhergehenden Ansprüche, **dadurch gekennzeichnet, dass** die Vorrichtung eine Abtastvorrichtung (10) mit einer in der zu beleuchtenden Oberfläche angeordneten Abtasteinheit (20), vorzugsweise einer CCD-Einheit, ist und dass die Feldlinse (28) das von den Punktlichtquellen (24) abgestrahlte Licht durch eine abzutastende Vorlage (16) lenkt, deren Abbildung auf die Abtasteinheit (20) abzubilden ist.

12. Vorrichtung nach Anspruch 11, **dadurch gekennzeichnet, dass** zwischen der Vorlage (16) und der Abtasteinheit (20) eine Abbildungsoptik (18), vorzugsweise ein telezentrisches Objektiv, zum Abbilden der Vorlage (16) auf die Abtasteinheit (20) angeordnet ist.

13. Vorrichtung nach einem der Ansprüche 1 bis 10, **dadurch gekennzeichnet, dass** die Vorrichtung als Linienbeleuchtung für Zeilenmodulatoren, insbesondere als Linienbeleuchtung für GLV-Zeilen, PLZT-Zeilen, DMD-Zeilen, LCD-Zeilen oder Lichtleitfaserzeilen, dient.
